# EUROPÄISCHE PATENTSCHRIFT

(11) **EP 0 577 978 B1**
(45) Veröffentlichungstag und Bekanntmachung des Hinweises auf die Patenterteilung: **04.09.1996**
(21) Anmeldenummer: 93108990.8
(22) Anmeldetag: 04.06.1993
(51) Int. Cl.: H02K 15/06

(54) **Werkzeug zum Aufnehmen und Einziehen von Spulen in Statoren elektrischer Motoren**
Tool for receiving and inserting coils in stators of electric motors
Outil pour la réception et l'insertion de bobines dans les stators de moteurs électriques

(30) Priorität: 07.07.1992 DE 4222230
(43) Veröffentlichungstag der Anmeldung: 12.01.1994
(73) Patentinhaber: STATOMAT Spezialmaschinen GmbH, D-6369 Niederdorfelden (DE)
(72) Erfinder: Leame, Filippo, W-6369 Schöneck 1 (DE)
(74) Vertreter: Jochem, Bernd, Dipl.-Wirtsch.-Ing.

(56) Entgegenhaltungen:
- EP-A- 0 352 531
- DE-A- 2 116 647
- DE-U- 8 521 173
- US-A- 3 828 830
- US-A- 4 800 646

## Beschreibung

Die Erfindung betrifft ein Werkzeug zum Aufnehmen und Einziehen von Spulen in Statoren elektrischer Motoren, mit einem Einziehteil, der bogen- oder kreisringförmig angeordnete, parallele Einziehlamellen mit sich längs der radial äußeren Seitenkanten erstreckenden, beim Einziehvorgang die radial inneren Enden der Statorzähne übergreifenden Lippen aufweist, und einem mit diesem in Eingriff zu bringenden Übertragungsteil, der mit bogen- oder kreisringförmig angeordneten, parallelen Abdeckleisten versehen ist, welche in Eingriffsstellung an den freien Enden der Einziehlamellen anliegen und mit einem axialem Vorsprung jeweils das Ende der Lippen axial überlappen.

Einziehwerkzeuge für in großen Serien produzierte Statoren haben normalerweise Lamellen, die mitsamt den einen Statorzahn umgreifenden Lippen aus einem Stück gefertigt sind. Die Herstellung solcher Lamellen mit kompliziertem, jeweils dem Querschnitt der Statorzähne anzupassenden Querschnitt ist sehr langwierig und aufwendig. Andererseits wird die Abnutzung der Einziehlamellen in der Großserienproduktion von Statoren dadurch verhältnismäßig klein gehalten, daß in vielen Fällen während des Einziehvorgangs keine axiale Relativbewegung zwischen dem Stator und den Einziehlamellen stattzufinden braucht. Man hängt die einzuziehenden Spulen zwischen die Lamellen des Einziehwerkzeugs, setzt dann das Statorblechpaket auf die Einziehlamellen und zieht mittels eines zentralen Einziehsterns die Spulen in die Nuten des Statorblechpakets, während dieses und die Einziehlamellen axial festgehalten werden. Selbst wenn die Einziehlamellen beim Einziehvorgang zusammen mit dem Einziehstern axial mitbewegt werden, ist bei den Großserienmaschinen für eine genaue Führung der Einziehlamellen gesorgt, so daß der Verschleiß durch Reibung an den Statorzähnen reduziert wird.

Es ist aus der US-A-4 800 646 bekannt, die gewickelten Spulen, die in der Großserienproduktion mit einem Einziehwerkzeug der vorstehend genannten Art in Statoren eingezogen werden sollen, zunächst in einem Übertragungswerkzeug aus Kunststoff aufzunehmen und von diesem auf das Einziehwerkzeug zu übertragen. Das Übertragungswekzeug ist mit parallelen, fingerförmigen Leisten versehen, die auf einem Kreis mit solchem Durchmesser angeordnet sind, daß sie sich bei koaxialem Zusammenführen des Übertragungs-und des Einziehwerkzeugs mit Bezug auf die gemeinsame Mittellängsachse radial außen an die Lamellen des Einziehwerkzeugs anlegen und somit an diesen entlang schieben lassen, bis sie gegen zusätzlich zu den Einziehlamellen am Einziehwerkzeug angebrachte Deckstreifenlamellen stoßen. Um eine gegenseitige genaue Ausrichtung der Leisten des Übertragungswerkzeugs und der Lamellen des Einziehwerkzeugs in Umfangsrichtung zu gewährleisten, ist in die letzteren auf ihrer radial äußeren Seite eine Längsnut eingearbeitet, in die sich beim Zusammenführen eine auf der radial inneren Seite der Leisten des Übertragungswerkzeugs ausgebildete Längsrippe schiebt. Die relative radiale Lage der Leisten des Übertragungswerkzeugs und der Lamellen des Einziehwerkzeugs ist ungünstig, weil die zunächst im Übertragungswerkzeug hängenden Spulen an der radial inneren Seite der Leisten anliegen und daher beim Hinüberschieben in das Einziehwerkzeug gegen die Spitzen und den vollen Querschnitt der ebenfalls radial innen an den Enden der Leisten des Übertragungswerkzeugs anliegenden Lamellen des Einziehwerkzeugs stoßen. Die Spulen können also nicht frei von Hindernissen aus den Schlitzen des Übertragungswerkzeugs in die Schlitze des Einziehwerkzeugs hinübergleiten, und beim Anstoßen gegen die scharfkantigen Enden der Einziehlamellen und deren Lippen besteht die Gefahr von Drahtbeschädigungen.Bei der Einzelproduktion oder Kleinserienfertigung von Statoren benutzt man ebenfalls bogen- oder kreisringförmig angeordnete, parallele Einziehlamellen, geht aber bei der Vorbereitung des Einziehvorgangs umgekehrt vor wie bei der Großserienproduktion: zuerst werden die Einziehlamellen in das Statorblechpaket eingefahren, und dann die vorgewickelten Spulen zwischen die Einziehlamellen eingehängt. Beim Einziehvorgang werden diese relativ zum Statorblechpaket nicht vorgeschoben, sondern zurückgezogen. Dabei nimmt ein relativ zu den Einziehlamellen befestigter Mitnehmer die eingehängten Spulen axial mit und zieht sie in die Statornuten ein.

Während des Zurückziehens der Einziehlamellen gleiten sie reibend an den scharfkantigen Statorzähnen entlang und sind durch die Spulen verhältnismäßig großen Querkräften ausgesetzt. Wegen des dabei auftretenden starken Verschleißes der Einziehlamellen werden diese normalerweise als Profilstäbe mit einem einfachen Profil und einem angeschweißten Blechstreifen hergestellt, welcher die den Statorzahn seitlich umgreifenden Lippen bildet (DE-GM 85 21 173). Der Blechstreifen reicht nicht bis zum vordersten Ende der Profilstäbe und bildet auf deren Umfangsfläche jeweils einen Absatz, der sich beim Einführen der Spulen in die Schlitze zwischen den Einziehlamellen störend bemerkbar macht. Außerdem stoßen die Spulen beim Einführen in die Schlitze des Einziehwerkzeugs gegen die mit Abstand von den freien Enden der Einziehlamellen radial nach außen abstehenden Blechlippen. Dabei kann es zu Beschädigungen der Drahtisolation kommen, was dazu geführt hat, daß die besonders vorsichtig zu behandelnden Spulen für Untertagemotoren bisher nur in umständlicher Weise manuell in das Einziehwerkzeug eingehängt wurden.

Ansonsten benutzt man zum Einführen der Spulen in ein Einziehwerkzeug der genannten Art mit Blechlippen an den Einziehlamellen eine sog. Übertragungszange, wie sie z. B. in der DE-OS 31 14 407 gezeigt ist. Sie besteht aus einem Tragteil, an dem in bogen- oder kreisringförmiger Anordnung parallele Stäbe befestigt sind. Der Radius dieser Anordnung ist kleiner als der Radius, auf dem die Einziehlamellen angeordnet sind, so daß die die vorgewickelten Spulen haltende Übertragungszange axial in das Einziehwerkzeug eingeführt werden kann. Während dieser Bewegung gleiten die Spulenstränge in die sich radial außen an die Schlitze zwischen den Stäben der Übertragungszange anschließenden Schlitze zwischen den Einziehlamellen des Einziehwerkzeugs, allerdings macht sich dabei auch das Anstoßen am Blech der Lippen der Einziehlamellen störend und ggf. schädigend bemerkbar. Im axial eingeschobenen Zustand läßt sich die Übertragungszange mit einem Zugorgan kuppeln, welches mit der die Einziehlamellen haltenden Basis verbunden ist, und dann nimmt die Übertragungszange am Einziehvorgang teil, wobei das die Stäbe der Übertragungszange haltende Tragteil die Funktion eines Mitnehmers hat, welcher verhindert, daß die Spulen infolge der beim Einziehvorgang auftretenden axialen Kräfte aus den Schlitzen zwischen den Einziehlamellen herausgleiten.

Die Einziehlamellen haben ebenso wie die Stäbe der Übertragungszange eine angeschrägte und abgerundete Spitze. Sie ist bei der herkömmlichen Ausführung zur Erleichterung des Einführens der Spulen in die Schlitze zwischen den Einziehlamellen erforderlich, aber andererseits ein Grund, den Blechstreifen mit Abstand zum vorderen Ende der Lamellen enden zu lassen.

Der Erfindung liegt die Aufgabe zugrunde, ein Werkzeug der eingangs genannten Art zu schaffen, bei welchem die geschilderten Behinderungen des Übertragungsvorgangs und Drahtbeschädigungen wirksam vermieden werden.

Vorstehende Aufgabe wird erfindungsgemäß dadurch gelöst, daß die Lippen Blechlippen sind und die Abdeckleisten in der Eingriffsstellung axial mit den Einziehlamellen fluchten, wobei der Querschnitt der Abdeckleisten in axialer Projektion den Querschnitt der Einziehlamellen überdeckt.

Im Vergleich zu der bisher üblichen Übertragungszange hat der neue Übertragungsteil des erfindungsgemäßen Werkzeugs radial außerhalb des Bogens der Zangenstäbe einen Bogen von Abdeckleisten, wobei die Stäbe und die Abdeckleisten unmittelbar nebeneinander derart angeordnet sind, daß die Schlitze zwischen den Stäben radial mit Schlitzen zwischen den Abdeckleisten fluchten. Die vorgewickelten Spulen werden also zunächst in diesen miteinander fluchtenden Schlitzen aufgenommen, bevor sie auf den Einziehteil des Werkzeugs übertragen werden. Noch in der Übertragungszange werden die Spulen üblicherweise abgekröpft, d. h. mit ihrem radial äußeren Teil zum hinteren Ende der Stäbe hin umgebogen, so daß dieses Umbiegen nicht erst während des Einziehvorgangs durch Anstoßen gegen die Stirnseite des Statorblechpakets erfolgt, wodurch die zum Einziehen erforderliche Kraft beträchtlich vergrößert würde.

Beim Abkröpfen äußert sich bereits ein erster Vorteil der Erfindung. Das Umbiegen des Spulendrahts findet jetzt nämlich nicht mehr an der radial äußeren Seite der Stäbe, sondern an der radial äußeren Seite der Abdeckleisten statt. Da diese beim Einziehvorgang mit den Einziehlamellen fluchten, befinden sich die Abkröpfstellen während des Einziehvorgangs in bestmöglicher Lage radial außerhalb der Einziehlamellen.

Der entscheidende Gesichtspunkt ist jedoch, daß die vorgewikkelten Spulen am Hindernis der Vorderkante des die Lippen einer Lamelle bildenden Blechstreifens vorbei in den Einziehteil des Werkzeugs geschoben werden können, denn die mit den Einziehnadeln axial fluchtenden Abdeckleisten führen die Spulenwindungen genauer auf die Schlitze zwischen den Einziehnadeln zu als bisher die auf kleinerem Radius als die Einziehnadeln angeordneten Stäbe der Übertrangszange. Außerdem überlappen die axialen Vorsprünge an den Abdeckleisten die vorderen Enden der Blechlippen, so daß die Spulenwindungen über diese gefährlichen Kanten hinweggeleitet werden.

In bevorzugter Ausgestaltung der Erfindung überdeckt in Eingriffsstellung der Querschnitt der Abdeckleisten in axialer Projektion den Querschnitt der Einziehlamellen. Dadurch wird erreicht, daß der Führungsspalt zwischen zwei benachbarten Abdeckleisten höchstens genauso breit ist wie der sich axial anschließende Schlitz zwischen benachbarten Einziehlamellen. Bei geradliniger axialer Bewegung der Spulen gleiten diese somit, ohne irgendwo anzuecken, in die Schlitze zwischen den Einziehlamellen über.

Damit nicht am Übergang der Schlitze zwischen den Abdeckleisten und der Schlitze zwischen den Einziehlamellen eine Unterbrechung entsteht, ist in weiterer bevorzugter Ausgestaltung der Erfindung vorgesehen, daß sich die Blechlippen bis zum stumpf ausgebildeten Ende der Einziehlamellen erstrecken und in Eingriffsstellung an diesem jeweils das mit Ausnahme des axialen Vorsprungs ebenfalls stumpf ausgebildete Ende einer Abdeckleiste anliegt. Die stumpfen Enden der Einziehlamellen und der Abdeckleisten stehen im Gegensatz zu den bisher verwendeten zugespitzten Ausführungen der die Führungsschlitze für die Spulen bildenden stabförmigen Organe, sind aber überraschenderweise mit keinerlei Nachteilen für das Einführen der Spulen verbunden. Bei den Abdeckleisten können nämlich die axialen Vorsprünge die Funktion von Spitzen übernehmen. Zu diesem Zweck gibt man ihnen vorzugsweise die Form von beidseitig angeschrägten oder abgerundeten Zungen, die auf der radial äußeren Seite der Abdeckleisten von deren stumpfen Ende axial vorspringen. Die Einziehlamellen brauchen bei der erfindungsgemäßen Ausführung keine Spitzen mehr zu haben, weil die Spulen an dieser Stelle bereits in einem Führungsschlitz sind und nur noch längs desselben verschoben zu werden brauchen.

Das Blech der Lippen sollte sich bis zum freien Ende der Einziehlamellen erstrecken. Dort läßt sich die vorderste Blechkante gut bearbeiten, oder alternativ kann auch in einer zweckmäßigen Ausführung der Erfindung das vordere Ende des Blechs gegen die stumpfe Vorderfläche der Einziehlamellen umgebogen sein.

Eine besonders genaue Fluchtung der Einziehlamellen und der Abdeckleisten wird erzielt, wenn in bevorzugter Weiterbildung der Erfindung in die freien Enden der Abdeckleisten oder der Einziehlamellen Zentrierstifte eingesetzt sind, die in Flucht zu passenden Bohrungen in den in Eingriffsstellung gegenüberliegenden Enden der Einziehlamellen bzw. Abdeckleisten angeordnet sind.

Nach dem Übertragen der Spulen vom Übertragungsteil auf den Einziehteil des neuen Werkzeugs müssen die Abdeckleisten entfernt werden, bevor der Einziehvorgang beginnt. Um eine leichte Handhabung dieses Werkzeugteils zu gewährleisten, sind die Aufnahmestäbe, wie sie bei Übertragungszangen üblich sind, an einem inneren Tragteil befestigt, welches leicht lösbar einerseits mit einem die Abdeckleisten haltenden äusseren Tragteil und andererseits mit einem Zugorgan kuppelbar ist, welches mit einem die unteren Enden der Einziehlamellen haltenden Basisteil verbunden ist.

Die Erfindung ist jedoch nicht darauf angewiesen, daß der Übertragungsteil des Werkzeugs nach Art einer herkömmlichen Übertragungszange Aufnahmestäbe hat. Alternativ könnte er auch radial innerhalb der bogen- oder kreisringförmigen Anordnung der Abdeckleisten ein als Spulenmitnehmer dienendes Druckstück aufweisen, welches leicht lösbar einerseits mit einem die Abdeckleisten haltenden äußeren Tragteil und andererseits mit einem Zugorgan kuppelbar ist, das mit einem die unteren Enden der Einziehlamellen haltenden Basisteil verbunden ist. In beiden zuletzt genannten Fällen wird nach der Überführung der Spulen vom Übertragungsteil auf den Einziehteil des Werkzeugs das die Abdeckleisten haltende Tragteil entfernt und dann das die Aufnahmestäbe haltende Tragteil bzw. das Druckstück mit dem Zugorgan gekuppelt. Außerdem kann in herkömmlicher Weise ein Deckstreifenhalter mit dem Tragteil der Aufnahmestäbe oder dem genannten Zugorgan verbunden werden, um beim Einziehvorgang hinter den Spulen Isolierstreifen in die Statornuten einzuziehen, die deren radial inneren Eingang verschließen (vgl. DE-OS 32 38 623).

Ein Ausführungsbeispiel der Erfindung wird nachstehend anhand der Zeichnung näher erläutert. Es zeigen:
- Fig. 1: eine vereinfachte Seitenansicht eines aus einem Übertragungsteil und einem Einziehteil bestehenden Werkzeugs zum Einziehen von Spulen in Statoren elektrischer Motoren;
- Fig. 2: einen ebenfalls vereinfachten Teilquerschnitt durch das Werkzeug nach Fig. 1;
- Fig. 3 A, B, C: eine Einziehlamelle des Werkzeugs nach Fig. 1 und 2 in zwei Seitenansichten und einem Querschnitt;
- Fig. 4 A, B, C: eine Abdeckleiste des Werkzeugs nach Fig. 1 und 2 in zwei Seitenansichten und einer vergrößerten Stirnansicht.

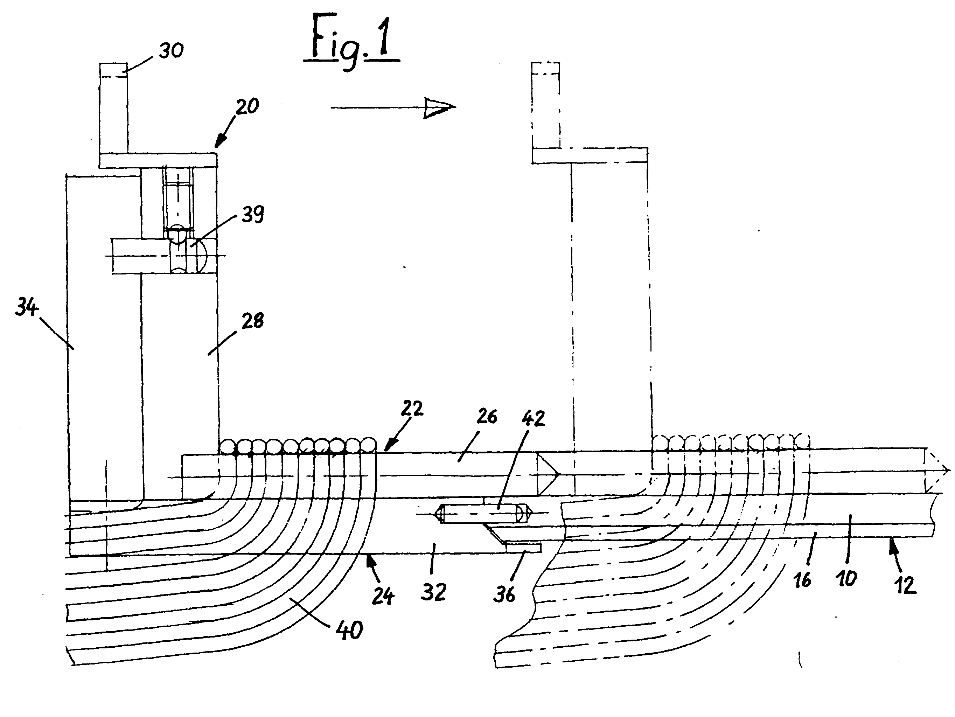

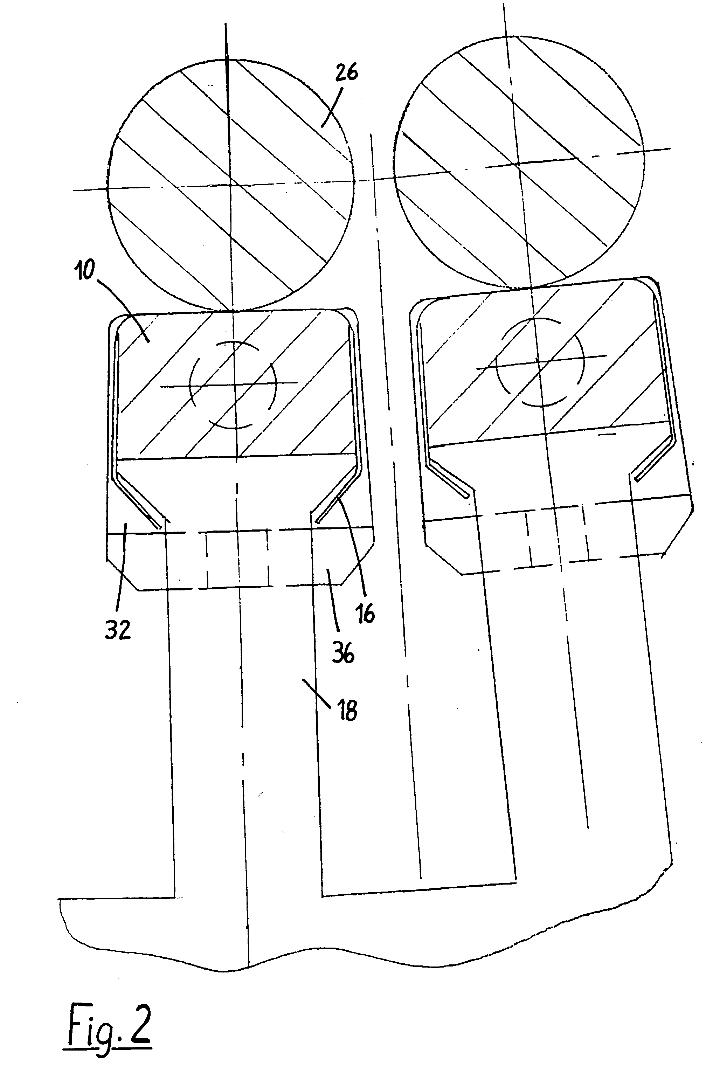

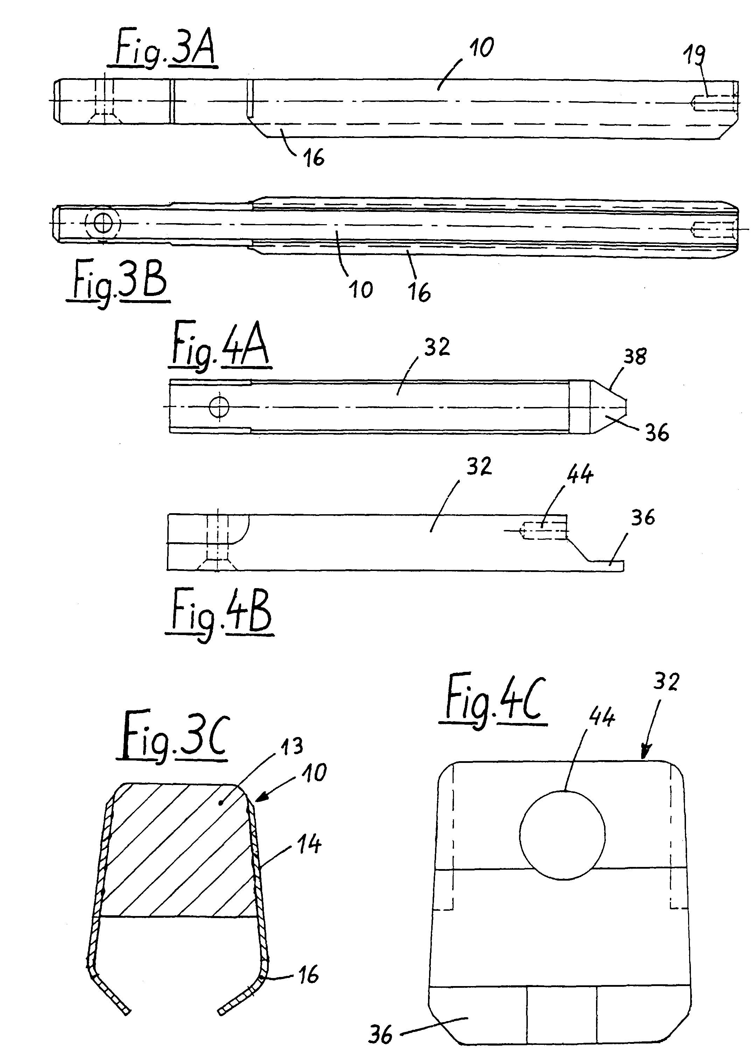

In Fig. 1 ist abgebrochen das vordere Ende einer Einziehlamelle 10 eines Einziehteils 12 in Form eines bis auf die noch zu erläuternden Unterschiede am freien Ende der Lamellen 10 herkömmlichen Einziehwerkzeugs dargestellt. Jede Einziehlamelle 10 besteht aus einem massiven Kern 13 aus Stahl, auf dessen Seitenflächen Bleche 14 z. B. durch Punktschweißen aufgeschweißt sind, die auf der radial äußeren Seite der bogenförmig angeordneten, parallelen Einziehnadel vorstehende Lippen 16 bilden, welche die radial inneren Enden der Zähne 18 eines Statorblechpakets umgreifen, wie aus Fig. 2 hervorgeht. Abweichend von Fig. 2 und 3 C könnten die Lippen 16 auch von einem einzigen Blech gebildet sein, welches die radial innere Seite der Einziehlamellen umgreift.

Die Besonderheit der Einziehlamellen 10 besteht darin, daß ihr Kern vorne stumpf endet und in der Endfläche mit einer Sackbohrung 19 versehen ist. Die Lippen 16 sind gemäß Fig. 3 A zum vorderen Ende hin angeschrägt, und die Vorderkanten der Bleche 14 sind dort, wo sie am Kern 13 anliegen, gemäß Fig. 3 B zur stumpfen Stirnfläche des Kerns 13 hin, wo sie enden, angefräst oder abgerundet.

Der insgesamt mit 20 bezeichnete Übertragungsteil des Werkzeugs gliedert sich in einen inneren Teil 22 und einen äußeren Teil 24. Der innere Teil 22 ist eine herkömmliche Übertragungszange mit bogenförmig angeordneten, parallelen und vorne angespitzen Aufnahmestäben 26, die mit ihrem hinteren Ende an einem Tragteil 28 befestigt sind. Zur besseren Handhabung ist am Tragteil 28 ein Handgriff 30 angebracht.

Der äußere oder Abdeckteil 24 des Übertragungsteils 20 besteht aus bogenförmig angeordneten, parallelen Abdeckleisten 32 aus Kunststoff oder Metall, die mit ihrem hinteren Ende an einem Tragteil 34 befestigt und am vorderen, stumpfen Ende jeweils radial außen mit einem axialen Vorsprung 36 mit schrägen Übergang zur stumpfen Stirnfläche und schrägen Seitenflächen 38 ausgebildet sind. In der in Fig. 1 gezeigten konzentrischen Anordnung der Übertragungszange 22 und des Abdeckteils 24 können die beiden Tragteile 28 und 34 axial aneinanderliegend mittels einer federbelasteten Kugelrastverbindung 39 axial leicht lösbar gekuppelt werden. In dieser gekuppelten Form sind die Teile gemeinsam zu handhaben.

Fig. 1 und 2 zeigen die relative Lage der beschriebenen Teile beim Überführen von Spulen 40 von der Übertragungszange 22 auf das Einziehwerkzeug 12. Man erkennt, daß die Abdeckleisten 32 mit den Einziehlamellen 10 axial fluchten. Die genaue gegenseitige Ausrichtung, auch unter starker Belastung, wird durch einen Zentrierstift 42 gewährleistet, der fest in eine Bohrung 44 im vorderen Ende der Abdeckleisten 32 eingesetzt ist, axial vorsteht und beim Heranführen des Übertragungsteils 20 an das Einziehwerkzeug 12 in die Sackbohrung 19 in den vorderen Enden der Einziehlamellen 10 einführbar ist.

Wenn in der gezeigten Stellung die Einziehlamellen 10 und die Abdeckleisten 32 mit ihren stumpfen Enden aneinander anliegen und über die Zentrierstifte 42 axial fluchtend ausgerichtet sind, überlappt der axiale Vorsprung 36 radial außen das vordere Ende der Lippen 16 und steht gemäß Fig. 2 auch seitlich, d. h. in Umfangsrichtung, über diese vor.

Die Arbeitsweise mit dem beschriebenen Werkzeug ist wie folgt:

Zunächst werden vorgewickelte Spulen 40 in den Übertragungsteil 20 des Werkzeugs eingehängt. Dies kann z. B. von Hand geschehen, wobei die Spitzen der Aufnahmestäbe 26 und die durch die seitlich schrägen Flächen 38 zugespitzen axialen Vorsprünge 36 das Einführen der Spulen 40 in die radial fluchtenden Schlitze zwischen den Aufnahmestäben 26 und den Abdeckleisten 32 erleichtern. Es spielt für die Erfindung jedoch keine Rolle, auf welche Weise die Spulen 40 in den Übertragungsteil 20 des Werkzeugs eingebracht werden. Der Übertragungsteil 20 könnte z. B. auch in eine Wickelvorrichtung eingesetzt werden, in welcher die Drahtwindungen der Spulen unmittelbar in die für sie vorgesehenen Schlitze zwischen den Aufnahmestäben 26 und Abdeckleisten 32 eingelegt werden.

Zur Vorbereitung des Einziehvorgangs werden dann die freien Enden der Einziehlamellen 10 des Einziehwerkzeugs 12 derart durch die zentrale Bohrung eines in Fig. 1 nicht gezeigten Statorblechpakets vorgeschoben (mit Bezug auf Fig. 1 nach links), daß die Blechlippen 16 gemäß Fig. 2 jeweils einen Statorzahn 18 umgreifen und dadurch seine scharfen Kanten abdecken. In der Ausgangsstellung vor dem Einziehvorgang ragen die freien Enden der Einziehlamellen ausreichend weit aus der Bohrung des Statorblechpakets hervor, daß der nachfolgend beschriebene Übertragungsvorgang der Spulen 40 vom Übertragungsteil 20 auf die Einziehlamellen 10 stattfinden kann. Zuvor werden jedoch die Spulen 40, während sie noch auf dem Übertragungsteil hängen, mit ihrem radial äußeren Teil vom freien Ende der Abdeckleisten 32 weg, also nach hinten, zum Tragteil 37 hin, abgekröpft.

Zum Übertragen der Spulen 40 auf die Einziehlamellen 10 wird der Übertragungsteil 20 auf das Einziehwerkzeug 12 ausgerichtet und fluchtend an dieses herangeführt. Dabei dringen die Aufnahmestäbe 26 in den Kranz der Einziehlamellen 10 ein, bis sich die vorderen stumpfen Enden der Abdeckleisten 32 gegen die jeweils zugeordneten, axial fluchtenden Einziehlamellen 10 anlegen. Bei dieser Kupplungsbewegung dringen die fest in den vorderen Enden der Abdeckleisten 32 sitzenden Zentrierstifte 42 in die Sackbohrungen 19 in den vorderen Enden der Einziehlamellen 10 ein. Gleichzeitig überlappen die axialen Vorsprünge 36 die vorderen Enden der Blechlippen 16 der Einziehlamellen 10.

Anschließend wird die Übertragungszange 22, z. B. mittels des Handgriffs 30, axial weiter zum Einziehwerkzeug 12 hin vorgeschoben. Da sich die Abdeckleisten 32 nicht weiter vorschieben lassen, löst sich die federbelastete Kugelrastverbindung 39, und die Übertragungszange 22 fährt unter Mitnahme der Spulen 40 soweit vor, bis diese in den Schlitzen zwischen den Einziehnadeln 10 hängen, wie in Fig. 1 strichpunktiert dargestellt. Danach wird der Abdeckteil 24 vom Einziehwerkzeug 12 abgenommen und entfernt. Die Übertragungszange 22 wird in herkömmlicher Weise am Einziehwerkzeug 12 befestigt, ggf. auch noch mit einer Mitnahmeeinrichtung zum Einziehen von Deckstreifen in die Statornuten verbunden, und dann kann in üblicher Weise der Einziehvorgang (mit Bezug auf Fig. 1 nach rechts) durchgeführt werden.

## Patentansprüche

1. Werkzeug zum Aufnehmen und Einziehen von Spulen in Statoren elektrischer Motoren, mit einem Einziehteil (12), der bogen- oder kreisringförmig angeordnete, parallele Einziehlamellen (10) mit sich längs der radial äußeren Seitenkanten erstreckenden, beim Einziehvorgang die radial inneren Enden der Statorzähne (18) übergreifenden Lippen (16) aufweist und einem mit diesem in Eingriff zu bringenden Übertragungsteil (20) der mit bogen- oder kreisringförmig angeordneten, parallelen Abdeckleisten (32) versehen ist, welche in Eingriffsstellung an den freien Enden der Einziehlamellen (10) anliegen und mit einem axialem Vorsprung (36) jeweils das Ende der Lippen (16) axial überlappen, **dadurch gekennzeichnet,** daß die Lippen (16) Blechlippen sind und die Abdeckleisten (32) in der Eingriffsstellung axial mit den Einziehlamellen (10) fluchten, wobei der Querschnitt der Abdeckleisten (32) in axialer Projektion den Querschnitt der Einziehlamellen (10) überdeckt.

2. Werkzeug nach Anspruch 1, **dadurch gekennzeichnet,** daß der Vorsprung (36) durch eine beidseitig angeschrägte oder gerundete Zunge auf der radial äußeren Seite der Abdeckleisten (32) gebildet ist.

3. Werkzeug nach Anspruch 1 oder 2, **dadurch gekennzeichnet,** daß sich die Blechlippen (16) bis zum stumpf ausgebildeten freien Ende der Einziehlamellen (10) erstrecken und in Eingriffsstellung an diesem jeweils das mit Ausnahme des axialen Vorsprungs (36) ebenfalls stumpf ausgebildete Ende einer Abdeckleiste (32) anliegt.

4. Werkzeug nach Anspruch 3, **dadurch gekennzeichnet,** daß das vordere Ende des Blechs, welches die Lippen (16) bildet, jeweils gegen die stumpfe Vorderfläche der Einziehlamellen (10) umgebogen ist.

5. Werkzeug nach einem der Ansprüche 1 bis 4, **dadurch gekennzeichnet,** daß in die freien Enden der Abdeckleisten (32) oder der Einziehlamellen (10) Zentrierstifte (42) eingesetzt sind, die in Flucht zu passenden Bohrungen (19, 44) in den in Eingriffsstellung gegenüberliegenden Enden der Einziehlamellen (10) bzw. Abdeckleisten (32) angeordnet sind.

6. Werkzeug nach einem der Ansprüche 1 bis 5, **dadurch gekennzeichnet,** daß der Übertragungsteil (20) radial innerhalb der bogen- oder kreisringförmigen Anordnung der Abdeckleisten (32) eine ebensolche Anordnung von parallelen Aufnahmestäben (26) aufweist, die an einem inneren Tragteil (28) befestigt sind, welches leicht lösbar einerseits mit einem die Abdeckleisten (32) haltenden äußeren Tragteil (34) und andererseits direkt oder indirekt mit einem Zugorgan kuppelbar ist, das mit einem die unteren Enden der Einziehlamellen (10) haltenden Basisteil verbunden ist.

7. Werkzeug nach einem der Ansprüche 1 bis 5, **dadurch gekennzeichnet,** daß der Übertragungsteil (20) radial innerhalb der bogen- oder kreisringförmigen Anordnung der Abdeckleisten (32) ein als Spulenmitnehmer dienendes Druckstück aufweist, welches leicht lösbar einerseits mit einem die Abdeckleisten (32) haltenden äußeren Tragteil (34) und andererseits direkt oder indirekt mit einem Zugorgan kuppelbar ist, welches mit einem die unteren Enden der Einziehlamellen (10) haltenden Basisteil verbunden ist.

## Claims

1. A tool for receiving and drawing coils into stators of electric motors, having a draw-in member (12) which has parallel draw-in blades (10) arranged in the form of a circular are or circle and with lips (16) which extend along the radially outer lateral edges and which overlap the radially inner ends of the stator teeth (18) during the drawing-in operation, and having a transmission member (20) which is to be brought into engagement therewith and which is provided with parallel cover strips (32) which are arranged in the form of a circular arc or circle and which in the engaged position are applied against the free ends of the draw-in blades (10) and with an axial projection (36) axially overlap the respective end of the lips (16), characterised in that the lips (16) are plate lips and in the engaged position the cover strips (32) are aligned axially with the draw-in blades (10), wherein the cross-section of the cover strips (32) overlaps in axial projection the cross-section of the draw-in blades (10).

2. A tool according to Claim 1, characterised in that the projection (36) is formed by a tongue, which is chamfered or rounded on both sides and arranged on the radially outer side of the cover strips (32).

3. A tool according to Claim 1 or 2, characterised in that the plate lips (16) extend up to the bluntly formed free end of the draw-in blades (10) and in the engaged position there is applied thereagainst the respective end of a cover strip (32) also formed bluntly, except for the axial projection (36).

4. A tool according to Claim 3, characterised in that the front end of the plate, which forms the lips (16), is bent over in each case against the blunt front surface of the draw-in blades (10).

5. A tool according to any one of Claims 1 to 4, characterised in that centering pins (42) are inserted into the free ends of the cover strips (32) or of the draw-in blades (10), which centering pins are arranged in alignment with matching bores (19,44) in the ends of the draw-in blades (10) and/or cover strips (32) situated opposite one another in the engaged position.

6. A tool according to any one of Claims 1 to 5, characterised in that radially inside the curved or circular arrangement of the cover strips (32) the transmission member (20) has exactly such an arrangement of parallel receiving bars (26) which are secured to an inner support member (28) which can be coupled in a readily releasable manner, on the one hand, with an outer support member (34) holding the cover strips (32) and, on the other hand, directly or indirectly with a drawing member which is connected to a base member holding the lower ends of the draw-in blades (10).

7. A tool according to any one of Claims 1 to 5, characterised in that radially inside the curved or circular arrangement of the cover strips (32) the transmission member (20) has a pressure member serving as a coil carrier which can be coupled in a readily releasable manner, on the one hand, with an outer support member (34) holding the cover strips (32) and, on the other hand, directly or indirectly with a tension member which is connected to a base member holding the lower ends of the draw-in blades (10).

## Revendications

1. Outil pour la réception et l'insertion de bobines dans les stators de moteurs électriques, comprenant une pièce d'insertion (12) munie de lamelles d'insertion (10) parallèles, disposées en arc de cercle ou en anneau de cercle et ayant des lèvres (16) le long des arêtes latérales radiales extérieures passant par-dessus les extrémités radiales intérieures des dents (18) du stator au cours de l'opération d'insertion, ainsi qu'une pièce de transmission (20) en prise avec cette pièce d'insertion, et ayant des baguettes de recouvrement (32), parallèles, disposées en arc de cercle ou en anneau de cercle et venant en position de prise contre les extrémités libres des lamelles d'insertion (10) et chevauchant axialement par une saillie axiale (36) chaque fois l'extrémité des lèvres (16),
caractérisé en ce que
les lèvres (16) sont en tôle et les baguettes de recouvrement (32) sont alignées axialement avec les lamelles d'insertion (10) en position de prise, la section des baguettes de recouvrement (32) recouvrant en projection axiale la section des lamelles d'insertion (10).

2. Outil selon la revendication 1,
caractérisé en ce que
la saillie (36) est formée par une languette en biais ou arrondie des deux côtés, sur le côté radial extérieur des baguettes de recouvrement (32).

3. Outil selon la revendication 1 ou 2,
caractérisé en ce que
les lèvres en tôle (16) s'étendent jusqu'à l'extrémité libre de forme aplatie des lamelles d'insertion (10) et en venant s'appliquer en position de prise contre l'extrémité également aplatie respective, à l'exception de la saillie axiale (36), d'une baguette de recouvrement (32).

4. Outil selon la revendication 3,
caractérisé en ce que
l'extrémité avant de la tôle formant les lèvres (16) est recourbée chaque fois contre la surface avant aplatie des lamelles d'insertion (10).

5. Outil selon l'une des revendications 1 à 4,
caractérisé en ce que
des broches de centrage (42) sont logées dans les extrémités libres des baguettes de recouvrement (32) ou des lamelles d'insertion (10), ces broches étant alignées avec des percages adaptés (19, 44) dans les extrémités opposées en position de prise des lamelles d'insertion (10) ou des baguettes de recouvrement (32).

6. Outil selon l'une des revendications 1 à 5,
caractérisé en ce que
la pièce de transmission (20) comporte, radialement à l'intérieur de la disposition en arc de cercle ou en anneau de cercle des baguettes de recouvrement (32), une disposition analogue de tiges de réception (26), parallèles, fixées à une pièce de support intérieure (28) susceptible d'être couplée d'une manière facilement amovible d'un côté à une pièce de support (34) extérieure tenant les baguettes de recouvrement (32) et, d'autre part, directement ou indirectement à un organe de traction relié à une pièce de base tenant les extrémités inférieures des lamelles d'insertion (10).

7. Outil selon l'une des revendications 1 à 5,
caractérisé en ce que
la pièce de transmission (20) comporte radialement à l'intérieur de la disposition en arc de cercle ou en anneau de cercle des baguettes de recouvrement (32), une pièce de pression servant à entraîner la bobine et qui est couplée, d'une part, de manière facilement amovible à une pièce de support (34) extérieure portant les baguettes de recouvrement (32), et, d'autre part, directement ou indirectement à un organe de traction relié à une pièce de base fixant les extrémités inférieures des lamelles d'insertion (10).
